Europäisches Patentamt

European Patent Office

Office européen des brevets

(11) Publication number: **0 391 316**
**A1**

## (12) EUROPEAN PATENT APPLICATION

(21) Application number: **90106304.0**

(51) Int. Cl.⁵: **G05B 19/04**

(22) Date of filing: **02.04.90**

(30) Priority: **05.04.89 IT 4571889**

(43) Date of publication of application:
**10.10.90 Bulletin 90/41**

(84) Designated Contracting States:
**AT DE ES FR GB IT SE**

(71) Applicant: **INDUSTRIE ZANUSSI S.p.A.**
**Via Giardini Cattaneo 3**
**I-33170 Pordenone(IT)**

(72) Inventor: **Frucco, Guiseppe**
**Via Trio a Segno 25**
**I-33170 Pordenone(IT)**

(74) Representative: **Patentanwälte Grünecker,**
**Kinkeldey, Stockmair & Partner**
**Maximilianstrasse 58**
**D-8000 München 22(DE)**

(54) **Electronic control unit for washing or drying machines.**

(57) Electronic control unit for laundry washers, laundry driers and the like, comprising a "master" microprocessor 2 for storing and controlling the sequential steps of each laundering and/or drying programme of any washer and/or drier model to be manufactured, and three "slave" microprocessors 3, 4, 5 adapted respectively to control the energization of the electric motor 10, to permit the activation of selected programmes and to determine the repeated activation and deactivation of the various electric operating components of any machine in the course of any selected programme.

The control unit may additionally comprise separate interfaces 35, 36, 37 connectable to said "master" microprocessor 2 and adapted respectively to permit the functionality of each selected programme to be verified, to impose work programmes and check programmes on the microprocessor, and to permit the execution of each work programme of any machine to be monitored at a central location remote from the respective machine.

INTERFACCIA SERVICE

INTERFACCIA IHS

INTERFACCIA CONFIG. COLLAUDO

Programme Input

PC

Connector Element
PONTICELLI — 20

Thermostat
NTC LAVAGGIO — 21

MOTORE — 10

Winding
1/2 CAMPO — 19

TACHIMETRICA — 18
Tacho-Generator

Program Selector
SELEZ CICLI — 22

Parameter Selector
SEL OPZIONI — 23

Control Selector
SEL REGOL — 24

Connector Element
PONTICELLI — 27

Monitor Display
VIS FASE — 25

Malfunction Display
CODICI GUASTI — 26

Drying Monitor
NTC ASCIUGATURA — 30

Humidity Sensor
SENSORE UMIDITA — 31

Level Sensor
I.II LIVELLO — 32

Detergent Sensor
SERB VUOTO — 33

CONTALITRI — 34
Liquid Meter

The present invention relates to an electronic control unit capable of being adapted to a plurality of washing machine and/or drying machine models for controlling the operation thereof.

Various electronic control units are already known and in use for controlling the execution of the operating cycles of washing machines such as laundry washers and dishwashers, and of laundry driers.

In particular, control units of this type substantially comprise at least one electronic microprocessor of a conventional type connected through suitable interfaces to the various electric components of the respective machine and adapted to control and supervise the execution of any operating cycle selected and activated by operating the various selector and input elements disposed on the control panel of the machine and operatively connected to the microprocessor.

Each electronic control unit of the above described configuration is thus designed for employ in a specific washing machine or drier model and programmable to control the execution of any operating cycle of this specific machine.

Although on the one hand a control unit of this type is functionally satisfactory and reliable in operation, it suffers from the disadvantage, on the other hand, of not being applicable to other washing machine or laundry drier models for controlling the execution of the different operating cycles of these machines, in view of the fact that, under these circumstances, different types of microprocessors may have to be employed for the various machine models.

It is an object of the invention to overcome the above noted shortcoming by the provision of an electronic control unit of a configuration permitting it to be adapted to a plurality of washing machine and laundry drier models and to be proprammed and tested quickly and in a simple manner prior to installation for its adaptation to any model of the machines refreed to above.

This control unit is optained by the provision of the structural characteristics substantially as described in the appended claims of the present application.

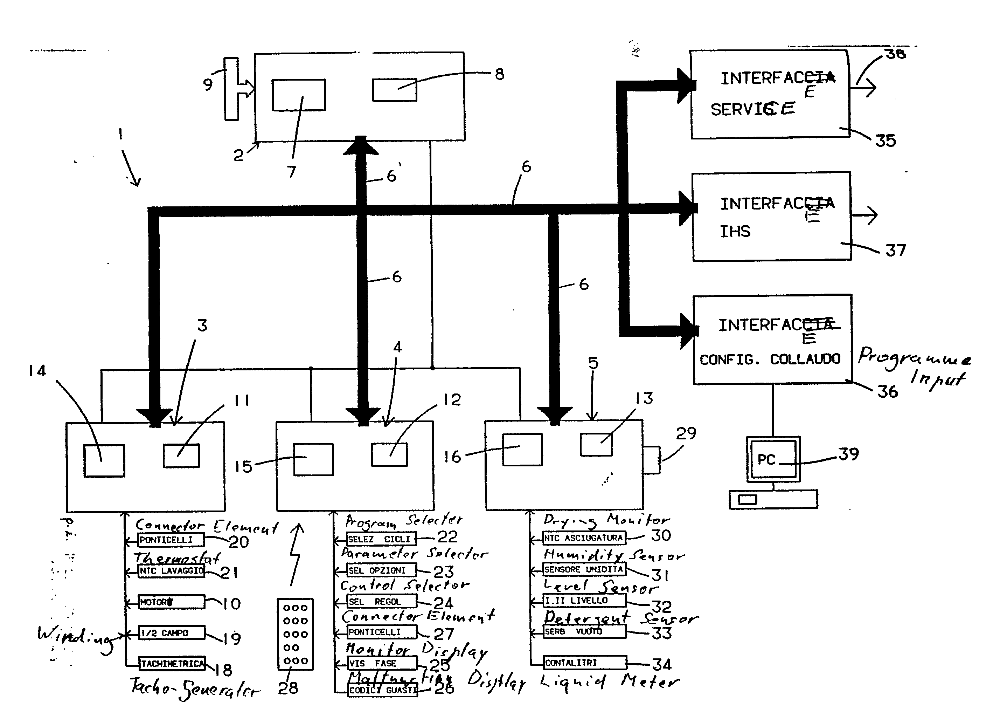

The invention will be more fully understood from the following description, given by way of a non-limitative example with reference to the accompanying drawing, the only figure of which shows a block diagram of the electric circuit of the control unit and of the system for programming and testing the unit in accordance with the invention.

With reference to the drawing, there is diagrammatically illustrated an electronic control unit 1 according to the invention, the unit being adapted to be applied to washing machines such as laundry washers and dishwashers, as well as to laundry driers, for determining the automatic execution of selected washing or drying programmes, respectively, by the respective machines.

In particular, control unit 1 substantially comprises a "master" microprocessor 2 and at least three separate "slave" microprocessors 3, 4, 5 devised in the form of exchangeable electronic circuit boards, said "slave" microprocessors 3, 4, 5 being connected to "master" microprocessor 2 by a bus 6 and adapted to perform the functions to be described below.

In particular, "master" microprocessor 2 preferably comprises at least a memory ROM 7 and a memory EEPROM 8 communicating with one another, of which memory ROM 7 is adapted to permanently store in coded form each and any laundry- or dishwashing programme (in the case of laundry washers or dishwashers, respectively) or each and any laundry drying programme (in the case of laundry driers or combined laundry washing and drying machines) which may be provided to be executed by any model of the above noted machines the industrial production of which is envisaged.

Memory EEPROM 8 on its part is adapted to store, in coded form as will be described below, the characteristic parameters and/or the laundry (or dish-)washing or laundry drying programmes specifically associated to each machine model to be produced, these parameters or programmes being stored in the memory prior to or during the production of the various machine models.

In this manner, whenever a specific washing or drying programme the characteristic parameters of which are amongst those previously stored in memory EEPROM 8 is selected in a manner to be described, memory ROM 7 of "master" microprocessor 2 will act to automatically control the execution of the respective programme by acting on the various operative components of the machine in the manner to be described.

Memory EEPROM 8 can also be erased and reprogrammed with other characteristic parameters corresponding to washing or drying programmes to be executed by a machine of a different model envisaged for production, and also stored in memory ROM 7 of "master" microprocessor 2.

"Master" microprocessor 2 may finally be programmed to control the performance of particular functions, for instance the execution of predetermined washing or drying programmes for demonstratoin purposes, the execution of functional diagnosis programmes for quick-testing the functionality of various operative components of the respective machine, these programmes being stored in memory ROM 7 in the manner to be described. To this purpose the microprocessor cooperates with suitable separate connector elements (only one of which is indicated at 9 in the drawing) themselves cooperating with corresponding branch terminals (not shown) of the electric input circuits of the microprocessor to thereby permit different connections to these circuits to be established as required by the particular function to be performed.

"Slave" microprocessors 3, 4, 5 on their part are adapted respectively to control the operation of the electric motor 10 during each selected washing or drying cycle of a respective machine, to act as an interface for the input or selection of washing or drying programmes, and to control the activation and deactivation (and the correct operation) of the electric operative components (resistance heaters and the like) of the respective machine during the execution of each selected programme.

In particular, each "slave" microprocessor 3, 4, 5 comprises at least an operative memory RAM 11,12,13, and a programme memory ROM 14,15,16 in communication with one another and connected in common to a conductor 17 provided for the supply of a low operating voltage to all microprocessors.

"Slave" microprocessor 3 is adapted to be activated by memory ROM 7 of 1 "master" microprocessor 2 for controlling the operation of electric motor 10 in accordance with the operative sequence (rotary speeds and energization timing etc.) established for the execution of successive phases of any selected washing or drying programme, and for thereby ensuring the proper operation of motor 10 as required in the execution of the selected programme.

To this purpose, each and any operative sequence to be executed by motor 10 during respective phases of each washing or drying programme to be carried out is permanently stored in coded form in memory ROM 14 of "slave microprocessor 3. When a determined washing or drying programme to be executed by a respective machine is selected in the manner to be described, "master" microprocessor 2 applies corresponding encoded command signals to operative memory RAM 11 of "slave" microprocessor 3 through bus 6. After RAM 11 receives and recognizes these encoded command signals corresponding to a determined operating sequence of motor 10, the command signals are passed on to programme memory ROM 14 which then acts to automatically process the signals for controlling motor 10 in accordance with the given sequence.

When after termination of the given operating sequence a subsequent operating sequence is to be initiated, the corresponding encoded command signals are again stored in memory RAM 11, whereby the previously stored signals are erased and the further operation of motor 10 is controlled in the described manner.

"Slave" microprocessor 3 may additionally be devised to perform conventional control and monitoring functions, for instance control of the rotary speed of motor 10 and monitoring the functional conditions of the machine during the execution of each washing or drying programme.

The speed control function may be performed with the aid of a tacho-generator 18 coupled to motor 10 in coaxial alignment, and by the selective energization and deenergization of separate sectors of the winding 19 of motor 10, or by the employ of specific connector elements 20 cooperating with corresponding branch terminals (not shown) of the electric input circuits of "slave" microprocessor 3 to thereby establish different circuit connections and/or different programme sequences in memory ROM 14 and to thus vary the control sequences of the activation of motor 10 by the action of the memory itself.

In the case of the monitoring function, a thermostatic sensor NTC 21 or the like may for instance be employed in a conventional manner for monitoring the temperature of the laundering bath in a laundry washer or of the laundry as it is being dried in a laundry drier.

The purpose of "slave" microprocessor 4 on its part is that of permitting the selection and visual verification of the washing or drying programmes to be executed by respective machines, by the actuation of corresponding programme selectors 22, parameter selectors 23 for the selection of characteristic parameters (type and colour of fabrics, amount of laundry to be laundered or dried etc.) of the selected programmes, and specific control elements 24 (temperature selector etc.) of the machine, said selectors and elements being usually provided on the control panel of these machines.

The thus selected programmes and/or characteristic parameters are displayed by corresponding display devices 25, and possibly occurring malfunctions of the machine may be indicated by additional display devices 26 and/or optic of acoustic warning devices 27 provided on the above-mentioned control panel.

In particular, for permitting these washing or drying programmes or characteristic parameters to be selected in the manner described, memory RAM 12 is devised to temporarily store all data corresponding to the selected programmes or characteristic parameters, these data being then processed in accordance with a corresponding processing programme stored in memory ROM 15, and transferred to "master" microprocessor 2 through bus 6.

"Master" microprocessor 2 then acts to ascertain whether these selection data are compatible with the programmes stored in memory ROM 7 of the microprocessor. When this is the case, the microprocessor proceeds to initiate the control of the operation of motor 10 in the manner described, and of the electric operative components of the machine to thereby determine the automatic execution and visual indication of all phases of the selected programme.

These washing or drying programmes may also be selected by the use of a conventional remote control device 28 of the radio frequency type, the ultrasonic type or the infrared radiation type, and cooperating with "slave" microprocessor 4 in a similar manner as the selectors and control elements described above.

In this case the circuit board carrying "slave" microprocessor 4 will additionally be provided with a corresponding receiver, and memory ROM 15 will have a corresponding processing programme stored therein.

In order, finally, to permit the electric operative components of the machine (eg. a conventional heater element 29 connected to the electric circuit of the machine) to be controlled by "slave" microprocessor 5, memory ROM 16 of this microprocessor is initially programmed to permanently store in coded form respective programmes for processing signals corresponding to the activation and deactivation cycles of these electric components, these signals being transferred thereto from "master" microprocessor 2 through bus 6 and corresponding to operating cycles established for each washing or drying programme to be executed.

"Slave" microprocessor 5 is additionally devised to ascertain the correct operation of the electric components of the machine and, in the case of any malfunction, to transmit corresponding coded signals to "master" microprocessor 2.

The latter thereupon acts to activate the corresponding displays or acoustic signal devices of the machine to thereby advise the user of the occurrence of the malfunction.

"Slave" microprocessor 5 is additionally connected to suitable sensors employed in the respective machines, for instance sensors 30, 31 for monitoring the progress of drying and the remaining humidity of the laundry in a laundry drier, or sensors 32, 33 provided respectively for monitoring the liquid levels in the tub and in detergent containers of a laundry washer, or finally sensors 34 provided for monitoring the quantity of liquids supplied to a washing machine.

The electronic control unit according to the invention may additionally comprise interfaces 35,36,37 provided respectively for the functions of servicing, programming or testing the different models of washing or drying machines to be produced, and for the centralized control of the functionality of each machine or even of various electric household appliances installed in an appartment or dwelling.

These interfaces may be switched onto bus 6 interconnecting "master" microprocessor 2 and "slave" microprocessors 3,4,5, so as to permit the microprocessors themselves to be controlled and acted upon in the manner and for the purposes to be described.

In particular, interface 35 is used by maintenance personnel servicing the washing or drying machine for ascertaining the correct functionality and for analysing and eliminating any possible malfunctions. These checking operations can be carried out in a direct manner on the respective machine itself by connecting the testing instruments required therefor to interface 35, or in an indirect manner from a distant location by the use of a special telephone line 38 the ends of which are connected respectively to interface by means of a conventional connector (not shown) and to the above-mentioned testing instruments.

In both cases the testing instruments connected to interface 35 permit the state of functionality of the machine to be analyzed by reading corresponding encoded signals of the diagnosis programme stored in memory EEPROM 8 of "master" microprocessor 2.

Interface 36 on its part is adapted to be connected to a personal computer 39 or another suitable electronic programming apparatus for the storage of all washing and/or drying programmes for different models of the machines to be produced, and of testing programmes for the produced machines.

For each model of the machines to be produced, interface 36 is used for entering into memory EEPROM 8 the specific parameters characterizing the respective operating programmes of the given model. The testing programmes to be executed by each model may also be thus entered as an alternative to the ones which may otherwise be entered directly into "master" microprocessor by way of connector element 9.

Interface 37, finally, is adapted to communicate with suitable separate control panels (not shown) provided at locations away from the respective machine and connected thereto, and possibly to other electric household appliances, by suitable electric cables or conductors.

Such control panels, which may be connected to other electric household appliances via corresponding interfaces (not shown), are provided with actuator or selector elements and display means operable respectively to select and to visually display the various programmes of the respective machine or other electric household appliances.

The thus described control unit is capable of being adapted to a wide range of machine models by the use of one and the same "master" microprocessor; the possibility, moreover, of exchanging the "master" microprocessor and the "slave" microprocessors against other microprocessors of a suitable design permits the control unit to be adapted to further models of the machines in question.

## Claims

Electronic Control Unit for Washing or Drying Machines

1. An electronic control unit for washing or drying machines comprising at least an electric motor, a plurality of electric operating components, actuator means for the selection of operating programmes to be executed by the machine, and sensing and display means for monitoring the functional conditions of the machine during each selected operating programme,
characterized in that said control unit additionally comprises first microprocessor means (2) adapted to store each and any washing and/or drying programme which may be executed by any of various machine models to be produced, and second, third and fourth microprocessor means (3,4,5) connected to said first microprocessor means (2), preferably by a serial connection or bus (6), and adapted respectively to control the rotary operation of said motor (10), to select and visually display the respective operating programmes, and to control the repeated activation and deactivation of said electric operative components (29) during each selected operating programme, said first microprocessor means (2) being adapted to control said second, third and fourth microprocessor means (3,4,5) during the execution of each operating programme selected by way of said third microprocessor means (4), and to be selectively connected to first, second and third interface means (35,36,37) provided respectively for monitoring the functionality of a given machine, for programming and testing different models of the machine, and for permitting the remote control of each machine.

2. A control unit according to claim 1, characterized in that said first microprocessor means (2) comprises at least one memory ROM (7) for the storage therein of functionality diagnosis programmes, operating programmes and functional testing programmes for corresponding machine models, and a memory EEPROM (8) for the storage therein of characteristic parameters of said operating programmes.

3. A control unit according to claim 1, characterized in that each of said second, third and fourth microprocessor means (3,4,5) comprises at least a respective memory ROM (14,15,16) and a respective memory RAM (11,12,13).

4. A control unit according to claim 2, characterized in that said first interface means (35) is adapted to be connected directly or indirectly, by means of at least one telephone line (38), to corresponding testing instruments operable to read indications of malfunctions stored in said memory EEPROM (8).

5. A control unit according to claim 2, characterized in that said second interface means (36) is adapted to be connected at least to a personal computer (39) or a similar electronic programming apparatus operable to enter said characteristic parameters of said operating programmes of the machine into said memory EEPROM (8).

EP 0 391 316 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-4253148 (W.D.JOHNSON ET AL) <br> * column 5, line 14 - column 5, line 55 * <br> * column 14, line 1 - column 16, line 2 * <br> * claim 1; figures 1, 8A, 8B * | 1 | G05B19/04 |
| A | | 3 | |
| Y | DE-A-3324482 (MIELE) <br> * the whole document * | 1 | |
| Y | US-A-3882305 (RICHARD JOHNSTONE) <br> * column 3, line 4 - column 7, line 9 * <br> * figure 1 * | 1 | |
| A | | 4 | |
| A | EP-A-182281 (QUICK-ROTAN ELEKTOMOTOREN) <br> * page 2, line 29 - page 3, line 26 * <br> * page 4, line 16 - page 4, line 35 * <br> * figure 1 * | 1, 2, 5 | |
| | | | **TECHNICAL FIELDS SEARCHED (Int. Cl.5 )** |
| | | | G05B |

The present search report has been drawn up for all claims

| Place of search | Date of completion of the search | Examiner |
|---|---|---|
| THE HAGUE | 12 JUNE 1990 | NETTESHEIM J. |